# FASCICULE DE BREVET EUROPEEN

(11) **EP 1 374 962 B1**
(45) Date de publication et mention de la délivrance du brevet: **05.04.2006**
(21) Numéro de dépôt: 02291587.0
(22) Date de dépôt: 26.06.2002
(51) Int. Cl.: B01D 19/00

(54) **Perfectionnement à un dispositif pour séparer un mélange comprenant au moins une phase gazeuse et une phase liquide, ledit dispositif étant intégré dans une enceinte**
Verbesserung zu einer Trenneinrichtung in einem Behälter zur Trennung einer Mischung bestehend aus mindestens einer gasförmigen und einer flüssigen Phase
Improvement to a separation device inside a vessel for the separation of a mixture containing at least a gaseous and a liquid phase

(43) Date de publication de la demande: 02.01.2004
(73) Titulaire: Institut Français du Pétrole, 92852 Rueil-Malmaison Cedex (FR)
(72) Inventeur: Brunard, Nathalie, 69630 Chaponost (FR); Gauthier, Thierry, 69530 Brignais (FR); Lepage, Jean-Paul, 92500 Rueil-Malmaison (FR)

(56) Documents cités:
- EP-A- 0 428 796
- US-A- 3 414 386
- US-A- 5 066 467

## Description

La présente invention concerne un dispositif mettant en jeu dans une même enceinte une phase solide et des phases liquides et gazeuses. L'invention trouve de façon générale son application dans les domaines de la conversion et/ou du traitement des distillats ou des résidus issus de la distillation du pétrole. Plus précisément ladite invention permet d'améliorér, au sein d'une enceinte réactionnelle, la séparation d'un mélange comprenant une fraction gazeuse et une fraction liquide comprenant éventuellement des particules solides, ledit mélange étant issu d'une zone de mise en contact d'une phase liquide, d'une phase gazeuse et de particules solides.

Selon l'invention; lesdites particules solides pourront être par exemple dispersées dans ladite phase liquide au sein d'une suspension dans une zone inférieure de l'enceinte (réacteur slurry). Selon un mode préféré d'application de la présente invention, ladite phase solide pourra être comprise au sein d'un lit bouillonnant de particules solides. Des exemples de réacteurs fonctionnant selon les principes propres aux lits en suspension (slurry) et au lits bouillonnants ainsi que leurs principales applications sont par exemple décrits dans « Chemical reactors, P. Trambouze, H. Van landeghem et J.P. Wauquier, ed. Technip (1988).

Plus particulièrement mais non limitativement, la présente invention trouve par exemple son application dans la conversion d'une charge introduite dans ladite enceinte sous la forme liquide et contenant des hydrocarbures, ladite conversion s'effectuant par mise en contact avec une phase gazeuse, comprenant par exemple de l'hydrogène (hydroconversion) et avec une phase solide qui présente le plus souvent une activité catalytique.

Ladite charge peut être, sans sortir du cadre de l'invention, un résidu atmosphérique obtenu par distillation directe d'un pétrole brut, un distillat obtenu par distillation sous vide d'un résidu atmosphérique d'un pétrole brut ou une charge liquide hydrocarbonée issue d'un charbon.

L'invention peut aussi, par exemple, s'appliquer aux procédés d'hydrotraitement de charges d'hydrocarbures tels que les procédés d'hydrodésulfuration, d'hydrodéazotation, d'hydrodémétallisation ou d'hydrodéaromatisation de diverses coupes pétrolières.

Bien que le présent dispositif soit applicable à tout procédé nécessitant de mettre en contact une phase gazeuse et une phase liquide avec un lit de particules solides, l'invention sera par la suite décrite, de manière non limitative, dans le cas particulier de l'hydroconversion d'une charge d'hydrocarbures dans un lit bouillonnant de particules solides catalytiques.

### Etat de la technique:

Le procédé en lit bouillonnant utilisé pour l'hydroconversion des fractions lourdes d'hydrocarbures ou d'une charge liquide hydrocarbonée issue d'un charbon consiste généralement à mettre en contact, en écoulement à co-courant ascendant, une charge hydrocarbonée en phase liquide et une phase gazeuse dans un réacteur contenant une phase solide comprenant le plus souvent un catalyseur d'hydroconversion. La zone réactionnelle comporte de préférence au moins un moyen de soutirage des particules solides situé à proximité du bas du réacteur et au moins un moyen d'appoint desdites particules contenant un catalyseur à proximité du sommet dudit réacteur. Ladite zone réactionnelle comporte le plus souvent au moins un circuit permettant le recyclage de la phase liquide, situé à l'intérieur ou à l'extérieur de la zone de réaction, ledit recyclage étant destiné, selon une technique connue de l'homme du métier, à maintenir un niveau d'expansion du lit suffisant pour assurer le bon fonctionnement de la zone réactionnelle en régime triphasique (gaz/solide/liquide).

Le brevet US Re25,770 décrit par exemple un tel procédé. Un mélange d'hydrocarbures liquides et d'hydrogène est injecté au travers d'un lit de catalyseur de telle manière que le lit est mis en expansion. Le niveau de catalyseur est contrôlé grâce au recyclage du liquide, ledit niveau de catalyseur restant en dessous de celui du liquide. Le gaz et le liquide hydrogéné traversent une interface délimitant une zone contenant la majeure partie des particules solides du lit de catalyseur et se retrouvent dans une zone pratiquement exempte desdites particules. Après une séparation gaz/liquide des fluides issus de la réaction, lesdits fluides sont divisés alors en deux fractions: une fraction contenant la majeure partie du liquide est recyclée vers la pompe d'ébullition et une autre partie est soutirée du réacteur avec le gaz. Cependant ladite séparation gaz/liquide n'est pas complète et une quantité substantielle de gaz est entraînée avec le liquide vers la pompe d'ébullition via le conduit de recycle. Cet entraînement de gaz est néfaste car il provoque un phénomène de cavitation de la pompe ainsi qu'une détérioration du contrôle du niveau de catalyseur qui peut aller jusqu'à la perte totale de l'expansion du lit.

Pour résoudre ce problème, plusieurs procédés et/ou dispositifs ont été proposés :

Le brevet US-A-4,221,653 décrit un équipement interne au réacteur et constitué d'une coupelle de préférence de forme conique munie de cheminées disposées sur deux cercles concentriques. Suivant la position des conduits, la composition du fluide le traversant varie. On distingue les conduits riches en gaz et les conduits riches en liquide. Les conduits riches en gaz sont ceux situés en périphérie. Leur entrée est située sur la surface de la coupelle et leur sortie est placée suffisamment loin des sorties des tubes riches en liquide et du conduit de recycle pour minimiser les interactions gaz-liquide. L'entrée des conduits riches en liquide est localisée en dessous de la surface de la coupelle. Après traversée de la coupelle de recycle, la majeure partie du liquide est recyclée vers la pompe d'ébullition et l'autre partie est soutirée du réacteur avec le gaz. Une fraction de gaz, estimée à moins de 8% en volume, est cependant entraînée avec le liquide recyclé.

Le brevet US-A-4,886,644 propose d'améliorer le dispositif précédent par rajout d'inserts hélicoïdaux qui communiquent au fluide une vitesse tangentielle. Il est également proposé d'ajouter des cyclones au-dessus des conduits pour améliorer encore l'efficacité de la séparation de la fraction gazeuse et de la fraction liquide.

### Le brevet US-A-5,066,467 est analogue à US-A-4,886,644 mais comprend deux étages de cyclones.

Le brevet US-A-4 810 359 décrit un dispositif où la séparation des fractions gazeuse et liquide est opérée à l'aide d'un cyclone placé en tête du réacteur. Le cyclone est relié au conduit de recycle qui ramène le liquide vers une pompe. Grâce à ce dispositif, une majeure partie de la fraction gazeuse est retirée du liquide recyclé mais une partie substantielle de liquide est entraînée dans le gaz de la partie supérieure dudit cyclone.

Selon un autre principe, tel que par exemple décrit dans la demande de brevet EP-A-1,086,734, le fractionnement du mélange issu du lit bouillonnant est effectué à l'extérieur du réacteur.
La demande de brevet EP-A-0 732,389 propose d'utiliser deux réacteurs en série en incluant un séparateur gaz-liquide entre lesdits deux réacteurs. Une partie du fluide issu du premier réacteur est recyclée vers ledit premier réacteur de façon à maintenir l'ébullition du catalyseur tandis que l'autre partie est envoyée dans ledit séparateur gaz/liquide. La fraction essentiellement liquide résultante de cette séparation alimente ensuite au moins en partie un second réacteur disposé en série.

Pour des raisons économiques, le séparateur placé après le réacteur est bien plus petit que le réacteur et le contrôle du niveau de liquide dans le séparateur externe est par conséquent très difficile dans ce type de procédé.

### Résumé de l'invention:

La présente invention se rapporte à un dispositif de séparation d'un mélange comprenant au moins une phase gazeuse et une phase liquide, ledit mélange étant issu d'une zone de mise en contact d'une charge liquide, d'une charge gazeuse et de particules solides, ledit dispositif étant intégré dans une enceinte et comprenant au moins:
- un équipement tel qu'une coupelle de recycle muni d'au moins un passage pour ledit mélange, ledit passage pouvant comprendre par exemple une cheminée comprenant préférentiellement des inserts générant un mouvement centrifuge au sein de la ou desdites cheminées,
- un premier élément de séparation ou séparateur primaire placé immédiatement après la ou lesdites cheminées et permettant une séparation dudit mélange en une fraction A contenant la majorité du liquide et une minorité de gaz et une fraction B essentiellement gazeuse contenant une minorité du liquide,
- une première conduite, placée à proximité de la partie supérieure de ladite enceinte, permettant l'évacuation de la fraction B essentiellement gazeuse issue du séparateur primaire,
- une deuxième conduite prolongeant la coupelle de recycle et par laquelle s'écoule gravitairement et est évacuée la fraction A contenant la majorité du liquide issu dudit séparateur primaire,
ledit dispositif comprenant en outre des moyens de contrôle (130) du niveau d'expansion de ladite phase liquide dans ladite enceinte, lesdits moyens étant configurés de façon à maintenir ledit niveau à une distance de l'orifice de sortie de la fraction B supérieure ou égale à 0,05 fois le diamètre interne de ladite enceinte, de préférence supérieure à 0,1 fois ledit diamètre. Ladite distance sera selon l'invention techniquement la plus faible possible, et généralement comprise entre 0,05 et 20 fois ledit diamètre. Selon l'invention, ladite deuxième conduite (d'évacuation de la fraction A) comprend des moyens séparés de recycle et de soutirage de ladite fraction.

Selon l'invention, le soutirage est assuré par une seconde conduite concentrique à la conduite de recycle et prolongeant l'équipement de recycle, ladite seconde conduite Présentant un orifice supérieur placé à proximité du niveau d'expansion de la phase liquide et étant reliée dans sa partie inférieure à des moyens d'évacuation de la fraction A et de contrôle de la phase liquide au sein de l'enceinte.

Donc, on dispose de deux conduits concentriques et le dispositif comprend des moyens séparés de recycle et de soutirage de la fraction A contenant la majorité du liquide et une minorité de gaz,

En général, ladite coupelle de recyclage, appelé parfois communément « recycle » est de forme conique et placée sensiblement au centre de ladite enceinte.

Le plus souvent, ladite deuxième conduite d'évacuation est reliée à des moyens de recycle dans l'enceinte d'au moins une partie de la fraction A.

Avantageusement, l'installation comprend en outre un deuxième élément de séparation ou séparateur secondaire de type inertiel, permettant la séparation de ladite fraction B en une fraction gazeuse évacuée par la première conduite et une fraction liquide évacuée par la deuxième conduite.
Selon un premier mode de réalisation de l'invention, chaque séparateur secondaire est relié par une conduite à un séparateur primaire, le nombre de séparateurs primaires étant égal au nombre de séparateurs secondaires.

Selon un mode de réalisation alternatif, chaque séparateur secondaire est relié par une conduite à une pluralité de séparateurs primaires. Par exemple, la coupelle de recycle comprend n séparateurs primaires regroupés en m groupements, chaque groupement contenant p séparateurs primaires, les sorties de chaque séparateur primaire étant reliées par une conduite à un séparateur secondaire et le nombre des séparateurs secondaires étant égal à m, de telle façon que m × p = n.

Selon un troisième mode de réalisation de l'invention le séparateur secondaire n'est pas physiquement relié au séparateur primaire, les orifices de sortie du séparateur primaire et d'entrée dudit séparateur secondaire se trouvant dans une partie de l'enceinte contenant une phase essentiellement gazeuse.

Avantageusement l'installation peut comprendre un troisième élément de séparation ou séparateur tertiaire de type inertiel, relié dans l'enceinte à l'orifice d'entrée du conduit d'évacuation de la phase gazeuse à l'extérieur de l'enceinte, ledit séparateur tertiaire traitant la fraction gazeuse issue du séparateur secondaire.

Dans certaines applications de la présente invention, ledit mélange initial comprend en outre une phase solide, ladite phase solide étant séparée par le séparateur primaire et évacué hors de l'enceinte avec la fraction A contenant la majorité du liquide.

Le présent dispositif trouve particulièrement son application dans la séparation des effluents issus d'un procédé réactionnel en lit bouillonnant. Par exemple, la présente invention peut être appliquée à l'hydroconversion d'une charge d'hydrocarbures en présence d'hydrogène et de particules catalytiques. Ainsi, dans le cas de l'hydroconversion au sein d'un lit bouillonnant de particules solides catalytiques d'une charge d'hydrocarbures dont le point d'ébullition est supérieur à 360°C, les conditions de pression régnant à l'intérieur de l'enceinte seront typiquement comprises entre 10 et 20 MPa, la température réactionnelle le plus souvent comprise entre 350 et 480°C et le diamètre équivalent des particules solides utilisées avantageusement compris entre 500 microns et 5 mm.

### Avantages de l'invention :

Dans sa forme la plus générale, l'invention décrit un dispositif permettant d'améliorer la séparation des fractions liquide (par exemple dans le cas d'un lit bouillonnant) ou solide/liquide (par exemple dans le cas d'un réacteur slurry) de la fraction gazeuse, lesdites fractions étant issues d'une zone de mise en contact d'une phase liquide, d'une phase gazeuse et de particules solides.
Dans le cas d'un lit bouillonnant, l'invention permet à la fois d'assurer un entraînement minimal de gaz dans le liquide recyclé assurant la mise en mouvement des particules solides et de produire en tête du réacteur un gaz pratiquement exempt de liquide.
Grâce au contrôle du niveau de liquide présent dans l'enceinte et à une séparation interne à l'enceinte réactionnelle des différentes fractions précédemment décrites, l'invention permet en outre de réduire le coût des installations décrites dans l'art antérieur par exemple en supprimant les équipements de séparation externes. La présente invention pourra typiquement être avantageusement appliquée dans le cadre de la modernisation d'unités déjà existantes.

### Présentation des figures :

D'autres caractéristiques, détails et avantages de l'invention apparaîtront plus dairement à la lecture de la description suivante, faite à l'aide des figures 1 à 3, 4.
La figure 1 illustre schématiquement une enceinte équipée d'un dispositif de séparation des fractions gazeuse et liquide en sortie d'un lit bouillonnant .
La figure 2 illustre une vue détaillée d'un exemple de réalisation dudit dispositif.
La figure 3 illustre un autre mode de réalisation dudit dispositif.
La figure 4 illustre un mode préféré de réalisation de l'invention.

### Description détaillée :

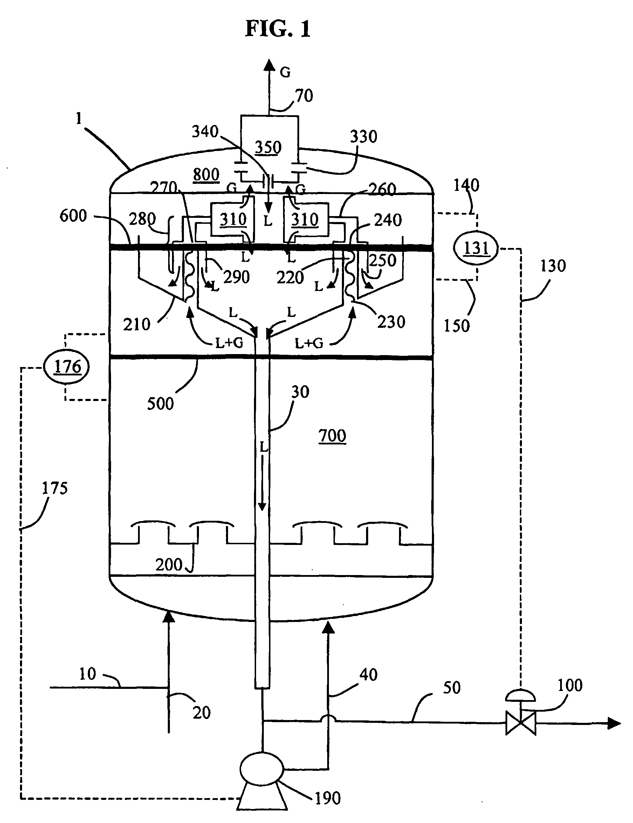

La figure 1 illustre le cas particulier mais non limitatif d'un réacteur 1 d'hydroconversion d'une charge lourde d'hydrocarbures en présence d'hydrogène (H₂) et de particules catalytiques au sein d'un lit bouillonnant 700. Ledit réacteur 1 est alimenté en charge liquide (comprenant un mélange d'hydrocarbures lourds) par un conduit 10 et en charge gazeuse (comprenant majoritairement de l'hydrogène) par un conduit 20, le mélange entre les deux phases pouvant s'effectuer en amont ou dans le réacteur lui-même. Des équipements 200 servant à la distribution des charges liquide et gazeuse sont disposés dans la partie inférieure du réacteur. Ces équipements sont par exemple des plaques à trous ou des plaques équipées de clapets, disposées sur toute la section du réacteur 1 dans un plan sensiblement horizontal. Après passage au travers de l'équipement 200, les charges liquide et gazeuse sont mises au contact des particules solides catalytiques de taille et de forme connues et optimisées par l'homme du métier au sein du lit bouillonnant 700. Les particules catalytiques sont maintenues en suspension par la vitesse ascensionnelle de la phase liquide. Le plus souvent, ladite vitesse fixe le taux d'expansion du lit de particules solides catalytiques, le débit de gaz étant maintenu constant. Le niveau 500, constitué d'un plan légèrement turbulent du fait de l'agitation provoquée par le passage des bulles de gaz, délimite la zone riche en particules solides catalytiques. Ce niveau, pour un inventaire de particules solides donné, dépend uniquement des débits de gaz et de liquide traversant la zone réactionnelle. Au-dessus du niveau 500, lesdites particules ne sont pas entraînées significativement. La zone située entre l'interface 500 délimitant le lit desdites particules et l'interface 600 est constituée très majoritairement d'un inélange d'une fraction gazeuse et d'une fraction liquide. La fraction gazeuse s'écoule sous forme de bulles dans la fraction liquide continue. Au-dessus de l'interface 600 se situe une phase essentiellement gazeuse, ne contenant que des projections de liquide dispersées dans la phase gazeuse continue.

La mise en ébullition du catalyseur est obtenue par le recyclage de ladite fraction liquide dans le réacteur de façon à maintenir une vitesse superficielle de liquide adaptée pour éviter la décantation des particules solides catalytiques et pour permettre un temps de contact entre le liquide, le gaz et lesdites particules sous l'interface 500 suffisamment long pour satisfaire aux contraintes cinétique et thermodynamique de la réaction. A ces fins, le liquide est donc soutiré du réacteur sous l'interface 600 grâce à un équipement 210 qui peut être une coupelle de recycle placée le plus souvent sensiblement au centre du réacteur 1 et préférentiellement de forme conique, par exemple telle que décrite dans le brevet US-A-4,221,653. Le liquide issu de l'équipement 210 alimente un conduit descendant 30 puis une pompe 190. Au refoulement de la pompe 190, le liquide est transporté par un conduit 40 et réinjecté dans le réacteur en amont des moyens de distribution 200.

Le système d'alimentation du circuit de recyclage du liquide ou équipement de soutirage 210 est équipé de dispositifs permettant de favoriser la séparation gaz-liquide, l'entraînement de gaz avec le liquide recyclé étant préjudiciable au bon fonctionnement de la pompe. De manière à favoriser la coalescence des petites bulles et ainsi le désengagement de la fraction gazeuse de la fraction liquide, on utilise selon un mode de réalisation avantageux de l'invention un ou des séparateurs primaires 280 favorisant un effet vortex dans l'écoulement Ces séparateurs peuvent avantageusement entourer un conduit 220 dans lequel est disposée une hélice induisant un mouvement centrifuge des fluides présents au sein dudit conduit 220. L'ouverture inférieure 230 du conduit 220 relie la zone située entre les interfaces 500 et 600 et l'intérieur de l'équipement 210. L'ouverture supérieure 240 du conduit 220 est localisée au niveau ou à proximité de l'interface 600 dont la position peut osciller, lors du fonctionnement du réacteur, autour d'une valeur moyenne, par exemple d'une distance correspondant de 1 à 20 fois le diamètre du conduit 220, typiquement d'environ 3 fois. Ladite ouverture 240 débouche sur l'intérieur d'une enceinte 290 de forme généralement cylindrique. Le liquide exempt de la majorité du gaz coule vers le bas à l'extérieur du conduit 220 et à l'intérieur de l'enceinte 290 et vient alimenter le système de recycle 210 grâce à une ouverture 250 située dans l'espace entre les parois verticales de l'enceinte 290 et du conduit 220. Le gaz, sous forme de bulles, s'écoule vers la partie supérieure de l'enceinte 290 jusqu'à l'interface 600 située à proximité de l'ouverture 240 puis est évacué de cette enceinte par une ouverture supérieure 270 localisée au-dessus de l'interface 600.

Selon l'invention, le système de désengagement 210 permettant l'alimentation du système de recycle (30, 190, 40) tel que précédemment décrit est situé à l'intérieur du réacteur et présente avantageusement une symétrie sensiblement axiale, généralement conique, autour de l'axe de l'enceinte du réacteur 1 et couvre une section de passage représentant généralement entre 50 et 100% de la section de passage du réacteur, et de préférence entre 80 à 98% de cette section. La pompe 190 est préférentiellement située à l'extérieur du réacteur et peut également être interne à ladite enceinte. Les produits liquides de la réaction sont soutirés préférentiellement en amont de la pompe 190 par la conduite 50 tel que représenté sur la figure 1. Sans sortir du cadre de l'invention, ledit soutirage pourra être cependant effectué en aval de ladite pompe190.

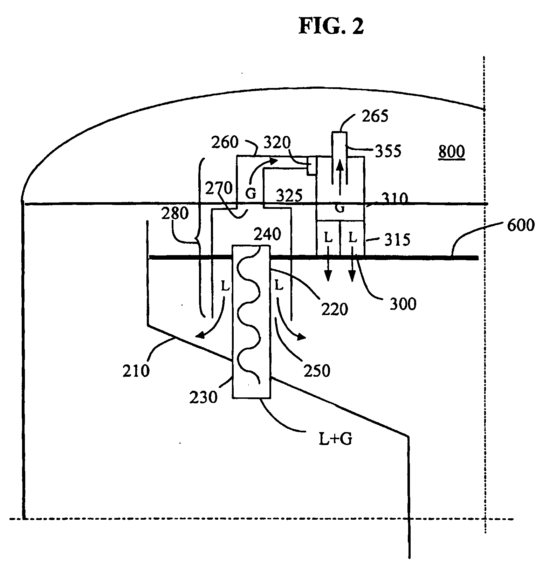

Du fait de la turbulence générée par le désengagement des bulles de la fraction liquide, des gouttelettes de liquide peuvent être entraînées avec la fraction gazeuse passant par l'ouverture 270. Afin de limiter cet entraînement de liquide avec les effluents gazeux, un ou des séparateurs Inertiels secondaires 310 peuvent être selon l'invention positionnés en aval du conduit 270 de chaque séparateur primaire 280. Préférentiellement, le nombre de séparateurs 310 est inférieur ou égal au nombre de séparateurs 280. La figure 2 montre plus en détail la liaison entre le séparateur primaire 280 et le séparateur secondaire 310. Un conduit 260, préférentiellement coudé, relie l'ouverture de sortie 270 de chaque séparateur 280 à l'ouverture d'entrée d'un séparateur secondaire 310. Selon le mode de réalisation illustré par la figure 2, les séparateurs 310 sont des cyclones constitués d'une enceinte cylindrique comportant une ouverture d'entrée 320, une ouverture de sortie 300 située sous l'ouverture d'entrée 320 et à proximité de l'interface 600 pour l'évacuation du liquide et d'une ouverture 265 pour l'évacuation du gaz sensiblement nettoyé d'au moins 50% du liquide ayant pénétré par 320, située au-dessus de l'entrée 320 et nettement au-dessus de l'interface 600.
La phase gazeuse encore chargée de gouttelettes issues du séparateur primaire 280 via le conduit 260 entre tangentiellement par l'ouverture 320 dans le corps cylindrique du séparateur secondaire 310 et tourne autour du conduit de sortie du gaz 355 situé au centre et orienté selon l'axe principal dudit corps.
Le liquide issu de l'enceinte 310 et évacué par l'ouverture 300 rejoint l'interface 600 en se mélangeant aux fluides situés dans la coupelle 210 sous l'interface 600. Le gaz sortant par l'ouverture 265 s'écoule dans la phase diluée essentiellement gazeuse 800 située au-dessus de l'interface 600.
Selon un premier mode de réalisation le gaz issu du séparateur secondaire 310 s'écoule ensuite vers un conduit 70 d'évacuation des gaz (voir figure 1) par une ou plusieurs ouvertures pratiquées dans la paroi du réacteur 1 et situées au-dessus de l'interface 600 à une distance supérieure et avantageusement proche d'un dixième du diamètre de l'enceinte du réacteur 1. Le liquide extrait du gaz est évacué grâce à une ouverture 300 située à la base du cylindre. Dans le cas où l'ouverture 300 est située sous l'interface 600, on utilisera avantageusement un dispositif 315 permettant d'éviter la formation d'un vortex liquide favorisant l'entraînement de gaz avec le liquide, ledit dispositif comprenant par exemple des pales croisées (non représentées sur la figure 1).
Selon un autre mode de réalisation et tel que représenté sur la figure 1, afin de limiter plus efficacement encore l'entraînement de liquide dans l'effluent gazeux sortant du réacteur 1. il est avantageux de positionner à proximité de la sortie du réacteur un ou plusieurs séparateurs inertiels tertiaires 350 (figure 1) qui peuvent être par exemple des cyclones de structure et de fonctionnement sensiblement semblables aux séparateurs secondaires 310 ou des garnissages structurés. Le ou les ouvertures d'entrée 330 du ou des séparateurs 350 relient la phase diluée et essentiellement gazeuse située au-dessus de l'interface 600 à l'intérieur de l'enceinte du ou des séparateurs 350. Les séparateurs tertiaires 350 permettent d'obtenir finalement un effluent gazeux sensiblement nettoyé d'au moins 50% du liquide ayant pénétré par l'ouverture 330. Le liquide séparé dans l'enceinte 350 et évacué par l'ouverture 340 rejoint l'interface 600 et se mélange aux fluides situés sous l'interface. Le gaz débarrassé de la majorité du liquide est évacué par la conduite 70 s'écoule hors du réacteur pour subir d'éventuels traitements ultérieurs. En général, le gaz circulant dans le conduit 70 contient moins de 1% massique de liquide grâce à l'utilisation combinée des moyens de séparation 280, 310 et 350.

Les produits liquides issus de la conduite 30 et sensiblement débarrassés de la majorité du gaz sont recyclés en aval du réacteur via une ligne de recyclage du liquide 40 et sous l'action d'une pompe de recycle 190. L'effluent liquide contient des quantités très faibles de gaz (le plus souvent moins de 1 % massique) grâce aux équipements de séparation 280, 310 et 350 mis en oeuvre au-dessus de la coupelle de recycle 210.

Afin de contrôler le niveau de l'interface 500, des moyens de mesure et de contrôle peuvent être mis en oeuvre pour assurer un bon fonctionnement du réacteur. On peut par exemple envisager de mesurer précisément le niveau de l'interface 500 en évaluant le profil de densité dans le réacteur à l'aide d'un gammamètre. La mesure du niveau obtenue à l'aide de ce moyen peut alimenter une boucle de régulation 175 qui, par comparaison avec la consigne rentrée par l'opérateur via un appareil de commande 176, contrôle la vitesse de rotation de la pompe de recycle 190. Grâce à un tel système, une baisse du niveau de l'interface 500 par rapport à une consigne donnée est corrigée par une augmentation de la vitesse de rotation de la pompe 190 qui induit une augmentation du débit de liquide recyclé dans le circuit de recycle (30, 40) et a pour conséquence l'augmentation de la vitesse superficielle de liquide dans le réacteur et par suite du taux d'expansion du lit de catalyseur.

Afin de contrôler le niveau de l'interface 600, on peut par exemple envisager d'évaluer le profil de densité dans le réacteur à l'aide d'un capteur de pression différentielle connecté au réacteur par deux prises de pression, l'une 140 située nettement au-dessus de l'interface souhaitée et l'autre 150 située nettement au-dessous de cette même interface. Pour éviter le bouchage de ces prises de pression, on pourra par exemple insuffler au niveau des prises de pression des quantités connues et contrôlées de gaz (par exemple la charge gazeuse initiale) ou de liquide (par exemple du liquide recyclé). La mesure de niveau obtenue de cette façon alimente une boude de régulation 130 qui actionne, par exemple sous l'action d'un organe de commande 131, l'ouverture d'une vanne 100 située sur un conduit d'évacuation 50 des produits liquides du réacteur. Ledit conduit 50 est préférentiellement placé en dérivation sur la conduite 30, en amont de la pompe 190. Avec un tel système, une variation de l'interface 600 par rapport à une consigne donnée sera corrigée respectivement par une variation de l'ouverture de la vanne 100, une variation du débit de liquide soutiré par la ligne 50 et par conséquence une variation de la fraction de liquide recyclée, les débits d'alimentation en gaz et en liquide dans les lignes 10 et 20 restant par exemple constants.

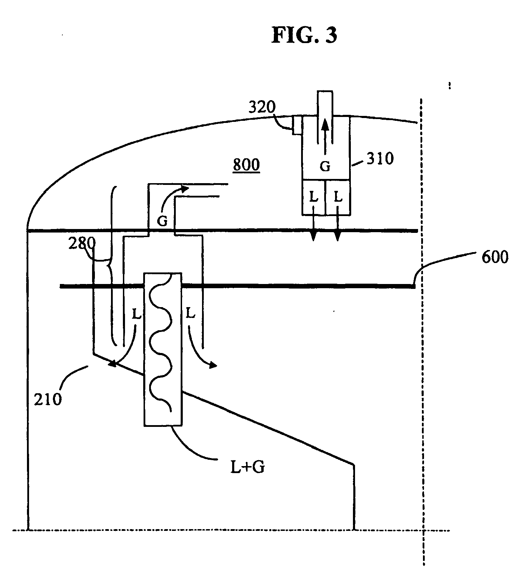

La figure 3 illustre un autre mode de réalisation permettant à la fois le désengagement du gaz dans le liquide de recycle et la séparation du liquide entraîné dans le flux gazeux. Le gaz chargé de gouttelettes issu du séparateur primaire entre tangentiellement par l'ouverture 320 d'un cyclone 310 de même nature que celui précédemment décrit en liaison avec la figure 2. Les séparateurs primaires 280 et secondaire 310 ne sont pas reliés, la phase gazeuse encore chargée de gouttelettes et issue du séparateur primaire 280 étant dans un premier temps évacuée dans la phase diluée essentiellement gazeuse 800 située au-dessus de l'interface 600.

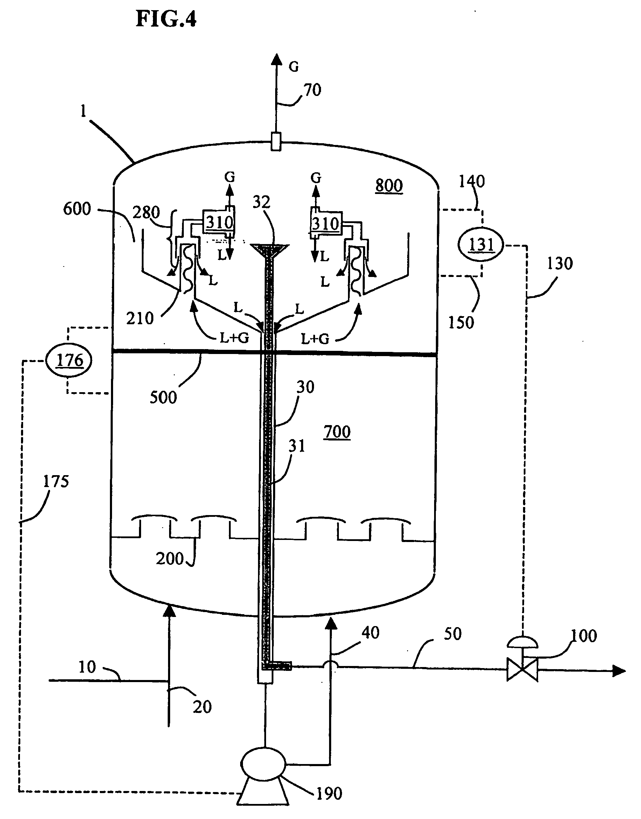

Dans le mode préféré de réalisation de l'invention qui va maintenant être décrit en relation avec la figure 4, les moyens de recycle (30, 190, 40) précédemment décrits en relation avec la figure 1 sont dissociés des moyens de soutirage (50, 100) de la phase liquide. Ainsi la conduite d'évacuation (30) de la figure 1 comprend (illustré figure 4) des moyens séparés de soutirage et de recyle. Dans un souci de clarté, les mêmes numérotations désignent les mêmes éléments dans les deux figures.

Dans le mode de réalisation de la figure 4, une deuxième conduite 31 est insérée dans le conduit descendant 30, les deux conduites étant concentriques. Les deux conduites sont fixées dans le réacteur 1 selon toute technique connue de l'homme du métier. Dans sa partie supérieure, ladite conduite 31 présente de manière préférée une forme évasée et tronconique. Ladite partie supérieure est placée entre les zones de prise de pression 140 et 150, de telle façon qu'en fonctionnement, son orifice d'entrée 32 affleure ou soit à un niveau légèrement inférieur à celui de l'interface 600. Préférentiellement, les orifices de sortie de la phase liquide des séparateurs 280 et 310 sont suffisamment éloignés de l'orifice d'entrée 32 permettant l'entrée de ladite phase liquide affleurante dans la conduite 31, de telle façon qu'un minimum de gaz est entraîné avec le liquide dans ladite conduite 31.

Les diamètres et les longueurs respectifs des conduites concentriques 30 et 31 sont suffisamment distincts pour permettre la dilatation de la conduite interne 31 sans bouchage complet ou partiel de la conduite externe 30. On ne sortirait cependant pas du cadre de l'invention en utilisant d'autres moyens équivalents permettant de résoudre les problèmes liés à la dilatation des conduites du fait de la température des fluides au sein du réacteur. Une autre solution possible serait par exemple l'utilisation de matériaux présentant des coefficients de dilatation thermique différents pour les deux conduites.

Le piquage des conduites 50 de soutirage et/ou 40 de recycle de la fraction liquide pourront par exemple être effectués à l'extérieur ou à l'intérieur du réacteur 1.

Lors du fonctionnement du réacteur 1, les fractions liquide et gazeuse sont séparées au sein des différents étages de séparations (280, 310). Seuls les éléments séparateurs 280 et 310 ont été représentés sur la figure 4 mais ne constituent bien évidemment pas une limitation du présent mode de réalisation. En particulier toutes les combinaisons possibles entre les différents enchaînements des moyens de séparations 280, 310 et 350 décrits en relation avec les figures 1, 2 et 3 ainsi que l'utilisation d'un unique séparateur primaire auraient pu être représentés dans le mode de réalisation de la figure 4, sans que l'on sorte du cadre de la présente invention.

En sortie desdits séparateurs, la fraction gazeuse est évacuée en tête de réacteur par la conduite 70. Une partie de la fraction liquide alimente la pompe 190 et le circuit de recyclage de la phase liquide par l'intermédiaire de la conduite 30. une autre partie de ladite fraction liquide est évacuée par la conduite 31, via l'ouverture 32 et alimente la conduite 50 de soutirage des produits liquides du réacteur. La vanne 100 permet le contrôle du débit de liquide soutiré.

Le découplage des moyens de soutirage (31, 50, 100) et des moyens de recycle (30, 190, 40) présente l'avantage d'un meilleur contrôle des différentes interfaces (500, 600) au niveau du réacteur. Ainsi en dissociant lesdits moyens on prévient efficacement toute perte d'ébullition du lit lors d'une large ouverture de la vanne 100 et/ou des difficultés à maintenir l'interface 600 comprise entre les deux prises 150 et 140, par exemple lors de variations importantes des débits de liquide soutiré ou de débit de charge injecté.

Un système d'alarme (non représenté) peut en outre être prévu dans le cas ou le niveau 600 viendrait à se rapprocher de la zone de prise de pression 140 et/ou de la zone de prise de pression 150.

## Revendications

1. Dispositif de séparation d'un mélange comprenant au moins une phase gazeuse et une phase liquide, ledit mélange étant issu d'une zone de mise en contact d'une charge liquide, d'une charge gazeuse et de particules solides, ledit dispositif étant intégré dans une enceinte et comprenant au moins :
- une coupelle de recycle (210) présentant une symétrie sensiblement axiale autour de l'axe de ladite enceinte et couvrant une section de passage représentant entre 50 et 100% de la section de passage de ladite enceinte, et munie d'au moins un passage pour ledit mélange,
- un premier élément de séparation (280) ou séparateur primaire placé immédiatement après le ou lesdits passages et permettant une séparation dudit mélange en une fraction A contenant la majorité du liquide et une minorité de gaz et une fraction B essentiellement gazeuse contenant une minorité du liquide,
- une conduite (70), placée à proximité de la partie supérieure de ladite enceinte, permettant l'évacuation de la fraction B essentiellement gazeuse issue du séparateur primaire,
- une conduite d'évacuation (30) prolongeant la coupelle de recycle (210) et par laquelle s'écoule gravitairement et est évacuée la fraction A contenant la majorité du liquide issu dudit séparateur primaire,
- ladite conduite d'évacuation (30) comprenant des moyens séparés de recycle (30, 190, 40) et de soutirage (31, 50) de ladite fraction A,
lesdits moyens de soutirage (31,50) étant constitués par une seconde conduite (31) concentrique à la conduite (30), prolongeant la coupelle de recycle (210), ladite conduite (31) présentant un orifice supérieur (32) placé à proximité du niveau d'expansion de la phase liquide et étant reliée dans sa partie inférieure à des moyens d'évacuation (50) de la fraction A et de contrôle (100, 130) de la phase liquide au sein de ladite enceinte,
et ledit dispositif comprenant en outre des moyens de contrôle (130) du niveau d'expansion de ladite phase liquide dans ladite enceinte, lesdits moyens étant configurés de façon à maintenir ledit niveau à une distance de l'orifice de sortie de la fraction B supérieure ou égale à 0,05 fois le diamètre interne de ladite enceinte.

2. Dispositif selon la revendication 1 dans lequel ladite conduite d'évacuation (30) est reliée à des moyens de recycle (190, 40) dans l'enceinte d'au moins une partie de la fraction A.

3. dispositif selon l'une des revendications 1 ou 2 dans lequel ladite coupelle de recycle (210) est de forme conique.

4. Dispositif selon l'une des revendications 1 ou 2 comprenant en outre un deuxième élément de séparation ou séparateur secondaire (310) de type inertiel, permettant la séparation de ladite fraction B en une fraction gazeuse évacuée par la conduite (70) et une fraction liquide évacuée par la conduite (30).

5. Dispositif selon l'une quelconque des revendications 1 à 4, dans lequel chaque séparateur secondaire (310) est relié par une conduite (260) à un séparateur primaire (280), le nombre de séparateurs primaires (280) étant égal au nombre de séparateurs secondaires (310).

6. Dispositif selon l'une quelconque des revendications 1 à 4, dans lequel chaque séparateur secondaire (310) est relié par une conduite (260) à une pluralité de séparateurs primaires (280).

7. Dispositif selon l'une quelconque des revendications 1 à 6 dans lequel le séparateur secondaire (310) n'est pas physiquement relié au séparateur primaire (280), les orifices de sortie du séparateur primaire et d'entrée (320) dudit séparateur secondaire se trouvant dans une partie (800) de l'enceinte contenant une phase essentiellement gazeuse.

8. Dispositif selon l'une quelconque des revendications 1 à 7 comprenant un troisième élément de séparation ou séparateur tertiaire (350) de type inertiel, relié dans l'enceinte immédiatement à l'orifice d'entrée du conduit (70), ledit séparateur tertiaire traitant la fraction gazeuse issue du séparateur secondaire.

9. Dispositif selon l'une quelconque des revendications 1 à 8 dans lequel ladite coupelle de recycle (210) est munie d'au moins une cheminée (220) comprenant des inserts générant un mouvement centrifuge au sein de la ou lesdites cheminées (220).

10. Dispositif selon l'une quelconque des revendications 1 à 9 dans lequel ledit mélange comprend en outre une phase solide, ladite phase solide étant séparée par le séparateur primaire et évacué par la conduite (30) avec la fraction A contenant la majorité du liquide.

11. Application du dispositif selon l'une quelconque des revendications 1 à 10 à la séparation des effluents issus d'un lit bouillonnant.

12. Application du dispositif selon l'une quelconque des revendications 1 à 10 à l'hydroconversion d'une charge d'hydrocarbures en présence d'hydrogène et de particules catalytiques.

## Claims

1. Device for separating a mixture that comprises at least one gaseous phase and a liquid phase, whereby said mixture is obtained from a zone for bringing into contact a liquid feedstock, a gaseous feedstock and solid particles, whereby said device is integrated in a chamber and comprises at least:
- a recycling cup (210) offering an approximately axial symmetry around the axis of said chamber and covering a passage section that represents between 50 and 100% of the passage section of said chamber, and equipped with at least one passage for said mixture,
- a first separating element (280) or primary separator that is placed immediately after said passage or passages and that allows a separation of said mixture into a fraction A that contains a majority of liquid and a minority of gas and an essentially fraction B that contains a minority of liquid,
- a pipe (70) that is placed close to the upper portion of said chamber that allows the evacuation of essentially gaseous fraction B that is obtained from the primary separator,
- an evacuation pipe (30) that extends recycling cup (210) and via which fraction A containing the majority of the liquid that is obtained from said primary separator flows under the action of gravity and is evacuated,
- said evacuation pipe (30) comprising separated means for recycling (30, 190, 40) and draw-off (31, 50) of said fraction A,
wherein said draw-off means (31,50) consist of a second pipe (31) that is concentric to pipe (30) and that extends recycling cup (210), whereby said second pipe (31) has an upper orifice (32) that is placed near the expansion level of the liquid phase and is connected in its lower portion to means for evacuating (50) fraction (A) and means for controlling (100, 130) the liquid phase within said chamber,
and wherein said device is **characterized in that** it also comprises means (130) for controlling the expansion level of said liquid phase in said chamber , wherein said means are configured so as to keep said level at a distance from the outlet orifice of fraction B greater than or equal to 0.05 times the inside diameter of said chamber.

2. Device according to claim 1, wherein said evacuation pipe (30) is connected to recycling means (190, 40) of at least a portion of fraction A in the chamber.

3. Device according to one of claims 1 or 2, wherein said recycling cup (210) has a conical shape,

4. Device according to one of claims 1 or 2, that also comprises a second separating element or inertial-type secondary separator (310) that allows the separation of said fraction B into a gaseous fraction that is evacuated via pipe (70) and a liquid fraction that is evacuated via pipe (30).

5. Device according to any of claims 1 to 4, wherein each secondary separator (310) is connected via a pipe (260) to a primary separator (280), whereby the number of primary separators (280) is equal to the number of secondary separators (310).

6. Device according to any of claims 1 to 4, wherein each secondary separator (310) is connected via a pipe (260) to a plurality of primary separators (280).

7. Device according to any of claims 1 to 6, wherein secondary separator (310) is not physically connected to primary separator (280), whereby the outlet orifices and inlet orifices (320) of said secondary separator are found in a portion (800) of the chamber that contains an essentially gaseous phase.

8. Device according to any of claims 1 to 7 comprising a third separating element or inertial-type tertiary separator (3 50), connected in the chamber immediately to the inlet orifice of pipe (70), whereby said tertiary separator treats the gaseous fraction that is obtained from the secondary separator.

9. Device according to any of claims 1 to 8, wherein said recycling cup (210) is equipped with at least one chimney (220) that comprises inserts that generate a centrifugal movement within said chimney or chimneys (220).

10. Device according to any of claims 1 to 9, wherein said mixture also comprises a solid phase, whereby this solid phase is separated by the primary separator and evacuated via pipe (30) with fraction A that contains the majority of the liquid.

11. Application of the device according to any of claims 1 to 10 to the separation of effluents that are obtained from an ebullated bed.

12. Application of the device according to any of claims 1 to 10 to the hydroconversion of a hydrocarbon feedstock in the presence of hydrogen and catalyst particles.

## Patentansprüche

1. Vorrichtung zum Separieren eines Gemisches umfassend mindestens eine gasförmige Phase und eine flüssige Phase, wobei das besagte Gemisch aus einem Kontaktierungsbereich für eine flüssige Beschickung, eine gasförmige Beschickung und feste Teilchen abgeleitet ist, wobei die besagte Vorrichtung in einen Behälter integriert ist und mindestens umfasst.
- eine Rückführungscoupelle (210), welche eine im Wesentlichen um die Achse des besagten Behalters herum axiale Symmetrie aufweist und einen Durchgangsabschnitt, welcher zwischen 50 und 100 % des Durchgangsquerschnitts des besagten Behälters darstellt, abdeckt, und welcher mit mindestens einem Durchgang für das besagte Gemisch versehen ist,
- ein erstes Separationselement (280) oder erster Separator, welches/welcher unmittelbar nach dem oder den besagten Durchgängen angeordnet ist und welcher eine Separation des besagten Gemisches in eine Fraktion A, welche den Hauptteil der Flüssigkeit und einen kleinen Teil des Gases enthält, und eine im Wesentlichen gasförmige Fraktion B, welche einen kleinen Teil der Flüssigkeit beinhaltet, ermöglicht,
- eine Rohrleitung (70), welche in der Nähe des oberen Abschnitts des besagten Behälters angeordnet ist, welche die Evakuierung der im Wesentlichen gasförmigen Fraktion B, welche aus dem primären Separator abgeleitet ist, ermöglicht,
- eine Evakulerungsrohrleitung (30), weiche die Rückführungscoupelle (210) verlängert und mittels der die Fraktion A, welche den Hauptteil der aus dem besagten primären Separator abgeleiteten Flüssigkeit enthalt, gravitationsbedingt abfließt und evakuiert wird.
- wobei die besagte Evakuierungsrohrteitung (30) separate Mittel zur Rückführung (30, 190, 40) und zum Abziehen (31, 50) der besagten Fraktion A umfasst,
wobei die besagten Mittel zum Abzlehen (31, 50) aus einer zweiten Rohrleitung (31), welche konzentrisch zu der Rohrleitung (30) ist, bestehen, welche die Rückführungscoupelle (210) verlängert, wobei die besagte Rohrleitung (31) eine obere Öffnung (32), welche in der Nähe der Expansionshöhe der besagten flüssigen Phase angeordnet ist, aufweist und an ihrem unteren Abschnitt mit Mitteln zur Evakuierung (50) für die Fraktion A und Regelungsmitteln (100,130) für die flüssige Phase im Innern des besagten Behälters verbunden ist,
und wobei die besagte Vorrichtung außerdem Regelungsmittel (130) für den Expansionspegel der besagten flüssigen Phase in dem besagten Behälter umfasst, wobei die besagten Mittel zum Halten des besagten Pegels in einem Abstand von der Auslassöffnung für die Fraktion B ausgelegt sind, welcher größer oder gleich 0,05 mal dem Innendurchmesser des besagten Behälters ist.

2. Vorrichtung nach dem Anspruch 1, in welcher die besagte Evakuierungsrohrleitung (30) mit Rückführungsmitteln (190, 40) in dem Behälter für mindestens elnen Teil der Fraktion A verbunden ist.

3. Vorrichtung nach einem der Ansprüche 1 oder 2, in welcher die besagte Rockführungscoupelle (210) kegelförmig ist.

4. Vorrichtung nach einem der Anspruche 1 oder 2, ferner umfassend ein zweites Separationselement oder sekundären Separator (310) vom Trägheitstyp, welches/welcher die Separation der besagten Fraktion B in eine gasförmige Fraktion, welche über die Rohrleitung (70) evakuiert wird, und eine flüssige Fraktion, welche über die Rohrleitung (30) evakuiert wird, ermöglicht.

5. Vorrichtung nach einem der Ansprüche 1 bis 4, in welcher jeder sekundäre Separator (310) mittels einer Rohrleitung (260) mit einem primären Separator (280) verbunden ist, wobei die Anzahl der primären Separatoren (280) gleich der Anzahl der sekundären Separatoren (310) ist.

6. Vorrichtung nach einem der Ansprüche 1 bis 4, in welcher jeder sekundäre Separator (310) über eine Rohrleitung (260) mit einer Vielzahl von primären Separatoren (280) verbunden ist.

7. Vorrichtung nach einem der Ansprüche 1 bis 6, in welcher der sekundäre Separator (310) nicht physisch mit dem primären Separator (280) verbunden ist, wobei sich die Auslassöffnungen des primären Separators und die Einlassöffnungen (320) des besagten sekundären Separators in einem Abschnitt (800) des Behälters befinden, welcher eine im Wesentlichen gasförmige Phase enthält.

8. Vorrichtung nach einem der Ansprüche 1 bis 7, umfassend ein drittes Separationselement oder tertiären Separator (350) vom Trägheitstyp, welches/welcher im Behälter unmittelbar mit der Einlassöffnung der Rohrleitung (70) verbunden ist, wobei der besagte tertiäre Separator die aus dem sekundären Separator abgeleitete gasförmige Fraktion behandelt.

9. Vorrichtung nach einem der Ansprüche 1 bis 8, in welcher die besagte Rücknahmecoupelle (210) mit mindestens einem Abzug (220) versehen ist, welcher Einsatztelle beinhaltet, welche eine zentrifugale Bewegung im Innem des oder der Abzuge (220) erzeugen.

10. Vorrichtung nach einem der Ansprüche 1 bis 9, in welcher das besagte Gemisch ferner eine feste Phase beinhaltet, wobei die besagte feste Phase von dem primären Separator separiert und über die Rohrleitung (30) mit der den Hauptteil der Flüssigkeit enthaltenden Fraktion A evakuiert wird.

11. Verwendung der Vorrichtung nach einem der Ansprüche 1 bis 10 für die Separierung von aus einem Sprudelbett abgeleiteten Abflüssen.

12. Verwendung der Vorrichtung nach einem der Ansprüche 1 bis 10 für die Hydrokonvertierung einer Kohlenwasserstoffbeschickung in Anwesenheit von Wasserstoff und katalytischen Teilchen.
